# EUROPEAN PATENT APPLICATION

(11) **EP 1 855 467 A1**
(43) Date of publication of application: **14.11.2007**
(21) Application number: 06253667.7
(22) Date of filing: 13.07.2006
(51) Int. Cl.: H04N 5/44

(54) **Interactive TV system with additional display and keyboard for answering a questionnaire relating to the current TV program**

(30) Priority: 28.03.2006 JP 2006087756
(71) Applicant: Fujitsu Ltd., Kawasaki-shi, Kanagawa 211-8588 (JP)
(72) Inventor: Mitsui, Hisafumi, Kanagawa 211-8588 (JP)
(74) Representative: Hitching, Peter Matthew

(57) **Abstract**

A display/response system includes a show display apparatus (30) and a response apparatus (40). In the show display apparatus (30), a show and a questionnaire are received, and the show is displayed. The questionnaire is sent to the response apparatus (40). The response apparatus displays a screen for the received questionnaire, determines a response to the questionnaire in response to an operation, and returns the response to the show display apparatus. The show display apparatus returns the response received from the response apparatus to a response collection apparatus (10).

## Description

### BACKGROUND OF THE INVENTION

### Field of the Invention

The present invention relates to a display/response system for displaying a show and a questionnaire which have been distributed and for responding to the questionnaire, a show display apparatus and a show display program storage medium.

### Description of the Related Art

In the field of broadcasting, analog broadcasting has been conventionally common in which information about a show, such as voices, picture colors and picture brightness, is converted to electrical signals, and the electrical signals are analog-modulated and delivered. Recently, in addition to the analog broadcasting, digital broadcasting is widely known in which pictures and voices of a show are encoded to bit strings configured by 0s and 1s and compressed, and a compressed digital signal is digitally modulated and delivered. The digital broadcasting has widening applications such as digital terrestrial broadcasting utilizing ground waves similar to those used in the conventional analog broadcasting, digital satellite broadcasting utilizing various satellites, and digital wire broadcasting utilizing a cable. Such digital broadcasting has advantages that it is possible to respond to multi-channelization because of its high frequency utilization efficiency and that it is possible to broadcast a high-quality image because of its high-resistance to noise or deformation.

Another advantage of digital broadcasting is that it is possible to deliver, in addition to pictures and voices of a show, additional information such as a questionnaire together, and therefore, bidirectional communication is possible in which a user who watches a show can not only receive the delivered show but also return a response to a questionnaire about the show.

As a method for realizing the bidirectional communication, there is known a method in which a URL of a questionnaire site is displayed on a TV, and a user inputs the URL into a personal computer to access the questionnaire site via the Internet and respond to a questionnaire with the use of a questionnaire screen prepared on the questionnaire site.

In Japanese Patent Laid-Open No. 2002-125161, there is description about a technique in which a show and additional information are displayed on a broadcast receiving apparatus (such as a TV), selected information (such as a URL) is cut from the additional information and sent to a peripheral apparatus (such as a personal computer), and then, at the peripheral apparatus, a questionnaire screen is acquired via a network based on the selected information to automatically display the questionnaire screen. According to the technique described in Japanese Patent Laid-Open No. 2002-125161, it is possible to save the user's effort of writing down the URL displayed on the TV and manually inputting the URL into the personal computer and thereby avoid the trouble that the user cannot access the questionnaire site because of a wrong note or a wrong input.

There is also known a method in which a questionnaire is displayed on a home TV connected to a communication network via a cable or the like, and a TV remote controller is used to respond to the questionnaire and return it via the communication network. In the digital wire broadcasting, a TV is already connected to a communication network. In the digital terrestrial broadcasting also, it has been promoted to connect a TV itself to a communication network so that bidirectional communication may be widely spread even among elderly people who are not familiar with a personal computer. It is already decided to switch the conventional analog broadcasting to the digital terrestrial broadcasting in the near future, and thus it is highly expected that the number of TVs connected to a communication network will further increase. By applying this technique, it is possible to certainly communicate a user' s desire to a provider of a show.

However, in the method in which a TV is used to respond to a questionnaire, a questionnaire is displayed being superimposed on a displayed show, or a show is displayed in a small size, which makes it uncomfortable for a user to respond to the questionnaire while watching the show. Additionally, when a response to a questionnaire is inputted with the use of a TV remote controller, the response is limited only to a simple one such as a numeric, and it is difficult to express the impression of a show and the like with a sentence as a response.

### SUMMARY OF THE INVENTION

The present invention has been made in view of the above circumstances and provides a display/response system which makes it possible to easily input a response to a questionnaire while watching a show, a show display apparatus and a show display program storage medium.

The present invention provides a display/response system having a show display apparatus and a response apparatus,
the show display apparatus including:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to the response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus; and
the response apparatus including:
a questionnaire receiving section which receives the questionnaire information sent from the show display apparatus;
a questionnaire display section which displays a questionnaire screen configured by the questionnaire information received by the questionnaire receiving section;
a response section which determines a response to the questionnaire on the questionnaire screen displayed by the questionnaire display section, in response to an operation; and
a response returning section which returns the response determined by the response section to the show display apparatus.

In the display/response system of the present invention, a show received by the show display apparatus is immediately displayed on the show display apparatus, and questionnaire information is sent to the response apparatus and displayed on the response apparatus as a questionnaire screen configured by the questionnaire information. When a response to the questionnaire is determined by a user watching the show with the use of the operating tool of the response apparatus, the response is sent to the show display apparatus, and the response is further transferred to the response collection apparatus. According to the display/response system of the present invention, a show and a questionnaire are displayed on different screens, which enables inputting a response to a questionnaire while watching a show.

In the display/response system of the present invention, it is preferable that the show display apparatus is a TV and the response apparatus is a personal computer.

It is expected that the number of TVs connected to a communication network will further increase in the future. Therefore, according to the preferable display/response system of the present invention, a user can easily input a long sentence with the mouse or the keyboard of a personal computer friendly to the user, utilizing a communication network applied to a TV as it is. Meanwhile, a provider of a show can certainly acquire detailed information, such as impression of the show, from a user.

In the display/response system of the present invention, it is preferable that the questionnaire sending section of the show display apparatus sends the questionnaire information to the response apparatus via a communication pathway without intervention of other apparatuses;
the response transfer section of the show display apparatus performs transfer to the predetermined response collection apparatus via a communication network; and
the response returning section of the response apparatus returns the response determined by the response section to the show display apparatus via the communication pathway.

Connecting the show display apparatus and the response apparatus with a communication pathway without intervention of other apparatuses eliminates the necessity of connecting the response apparatus to a communication network and thereby a provider fee and a connection cost.

The present invention provides a show display apparatus including:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus.

The present invention also provides a showdisplayprogram storage medium in which a show display program to be executed in a computer is stored, the show display program causing the computer to implement:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus.

As mentioned above, according to the show display apparatus and the show display program storage medium of the present invention, it is possible to display a show on the show display apparatus and display a questionnaire screen on the response apparatus, and a user can easily input a response to a questionnaire with the use of a user-friendly operating tool of the response apparatus while watching the show.

### BRIEF DESCRIPTION OF THE DRAWINGS

Fig. 1 is a schematic block diagram of a show delivery system according to an embodiment of the present invention;
Fig. 2 is an internal block diagram of a TV;
Fig. 3 is an internal block diagram of a personal computer;
Fig. 4 is a flowchart showing the flow of a sequence of processings from receiving a show and a questionnaire from a base station to sending a response to the questionnaire to the base station;
Fig. 5 (A) and Fig. 5 (B) shows images to be displayed on the display screen of the TV; and
Fig. 6 shows a questionnaire screen to be displayed on the display screen of the personal computer.

### DETAILED DESCRIPTION OF THE INVENTION

An embodiment of the present invention will be described below with reference to drawings.

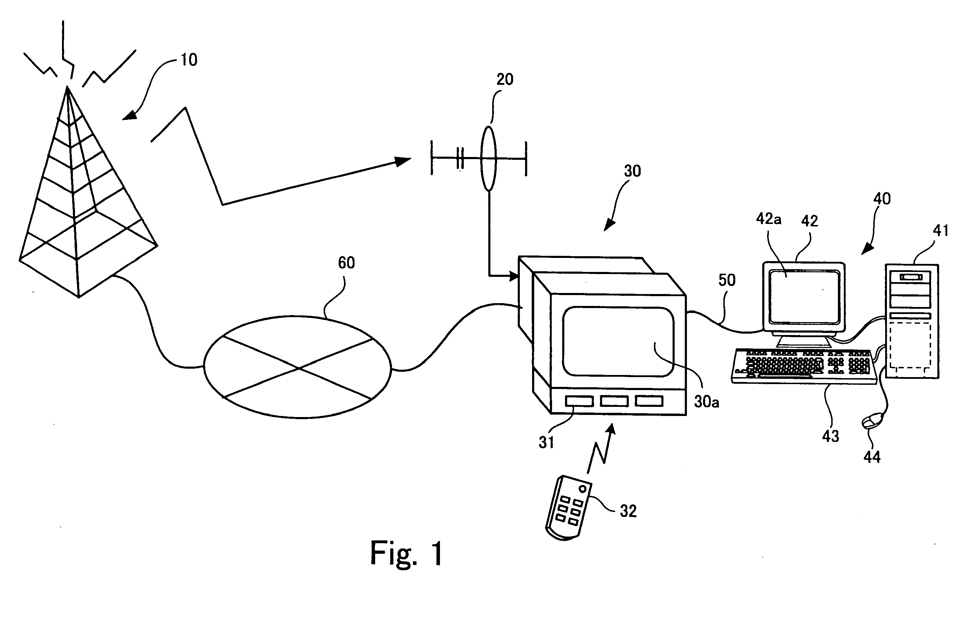

Fig. 1 is a schematic block diagram of a show delivery system to which an embodiment of the present invention is applied.

This show delivery system is a system enabling bidirectional communication in which a show and a questionnaire about the show are delivered from a provider that delivers the show, and a user who watches the show receives the show and the questionnaire and sends a response to the questionnaire to the provider. The show delivery system is configured by a base station 10 which performs delivery of a show and questionnaire information and collection of responses, a TV 30 for watching the show delivered from the base station 10, and a personal computer 40 for responding to a questionnaire indicated by the questionnaire information delivered together with the show. Though the show delivery system is actually configured by a lot of connected base stations and TVs, Fig. 1 shows only such components as are required for description of the present invention.

At the base station 10, digital picture information indicating pictures of a show, digital voice information indicating voices of the show, additional information including a questionnaire about the show, and the like are integrated as show information, and the show information is compressed, digitally modulated, and transmitted as electrical waves. And thereby, the show and questionnaire information are delivered. The base station 10 corresponds to an example of "a delivery station" and "a response collection apparatus" in the present invention.

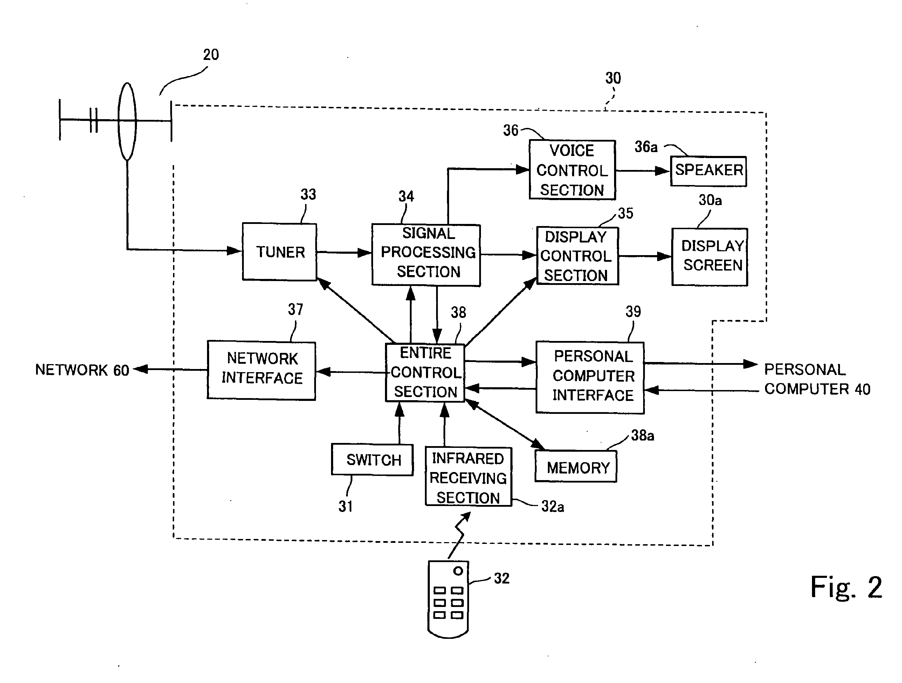

The show or questionnaire information delivered from the base station 10 is received by an antenna 20 and communicated to the TV 30. The TV 30 corresponds to an example of "a show display apparatus" stated in the present invention, and it also corresponds to an example of "a TV" of the present invention. When seen from the external configuration, the TV 30 is provided with a display screen 30a for displaying a show, a switch 31 for operating the power source or the channels of the TV, a speaker 36a for outputting voices (see Fig. 2) and the like. There is also provided a remote controller 32 for remotely operating the switch 31 from the point of the user's hand with the use of an infrared ray. The TV 30 is connected to the personal computer 40 via a USB cable 50 and connected to the base station 10 via a communication network 60. The USB cable 50 corresponds to an example of the "communication pathway without intervention of other apparatuses" stated in the present invention.

Fig. 2 is an internal block diagram of the TV 30.

Inside the TV 30, as shown in Fig. 2, there are provided a tuner 33 which selects an electrical wave of a channel selected by a user from among electrical waves received by the antenna 20 and converts the selected electrical wave to the digital show information described above, a signal processing section 34 which expands the compressed show information and extracts picture information, voice information and additional information from the expanded show information, a display control section 35 which converts digital picture information to an analog signal and sends it to the display screen 30a, a voice control section 36 which converts a voice signal to an analog signal and sends it to a speaker 36a, a network interface 37 which returns a response to a questionnaire to the base station 10 via the communication network 60, an entire control section 38 which controls the entire TV 30, a memory 38a in which various information for controlling the entire TV 30 is stored, a personal computer interface 39 which sends questionnaire information to the personal computer 40 and receives a response to the questionnaire from the personal computer 40, an infrared receiving section 32a which receives an infrared ray emitted from the remote controller 32, and the display screen 30a, the switch 31 and the remote controller 32 which are also shown in Fig. 1. The tuner 33 corresponds to an example of "a show receiving section" and " a questionnaire receiving section" of the present invention. The display screen 30a and the display control section 35 are an example of "a show display section" stated in the present invention. The network interface 37 corresponds to an example of "a response transfer section" stated in the present invention, and the personal computer interface 39 corresponds to an example of "a questionnaire sending section" and "a response receiving section" stated in the present invention. Each of these sections is realized as each functional block by a program, which is executed by a control device included in the TV, controlling the related hardware.

The TV 30 shown in Fig. 1 is configured as described above. Subsequently, the configuration of the personal computer 40 shown in Fig. 1 will be described.

As shown in Fig. 1, when seen from the external configuration, the personal computer 40 is provided with a main device 41, an image display device 42 for displaying an image on a display screen 42a in response to an instruction from the main device 41, a keyboard 43 for inputting various information corresponding to a key operation into the main device 41, and a mouse 44 for, by specifying any position on the display screen 42a, inputting an instruction corresponding to what is displayed at the position, for example, an icon. Furthermore, this main device 41 has a CD/DVD mounting slot through which a DVD or a CD-ROM is mounted and a FD mounting slot through which a flexible disk (hereinafter abbreviated as FD) is mounted, though they are not shown. The personal computer 40 corresponds to an example of "a response apparatus" stated in the present invention.

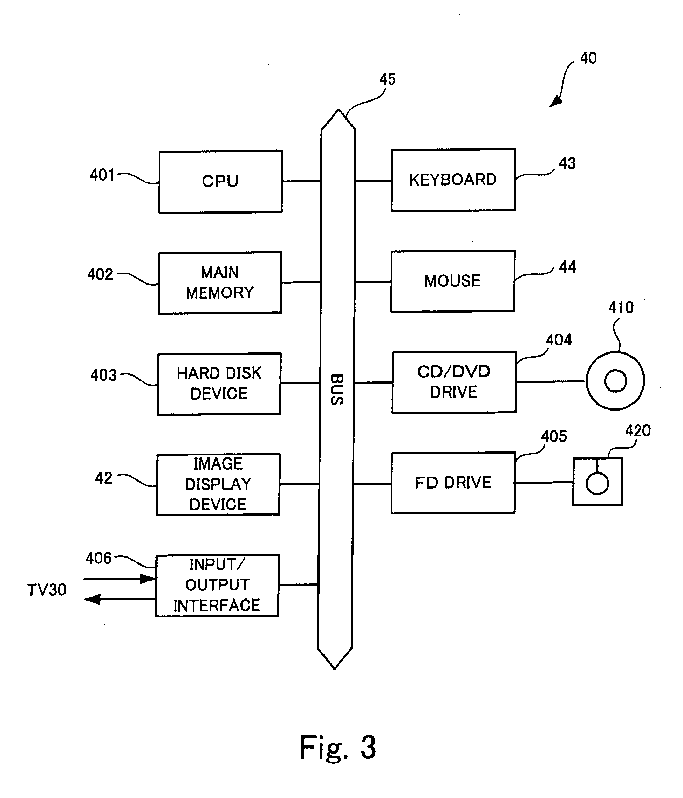

Fig. 3 is an internal block diagram of the personal computer 40.

Inside the main device 41, as shown in Fig. 3, there are included a CPU 401 which executes various programs, a main memory 402 on which a program stored in a hard disk device 403 is read and developed to be executed by the CPU 401, the hard disk device 403 in which various programs and the like are stored, a CD/DVD drive 404 in which a CD-ROM 410 or a DVD is mounted and which accesses the mounted CD-ROM 410 or DVD, an FD drive 405 in which an FD 420 is mounted and which accesses the mounted FD 420, and an input/output interface 406 which receives questionnaire information from the TV 30 shown in Fig. 1 and sends a response to the questionnaire to the TV 30. These various components and the image display device 42, the keyboard 43 and the mouse 44, which are also shown in Fig. 1, are mutually connected via a bus 45. The input/output interface 406 corresponds to an example of each of the questionnaire receiving section and the response returning section stated in the present invention. The keyboard 43 and the mouse 44 correspond to an example of the response section stated in the present invention.

The show delivery system shown in Fig. 1 is basically configured as described above.

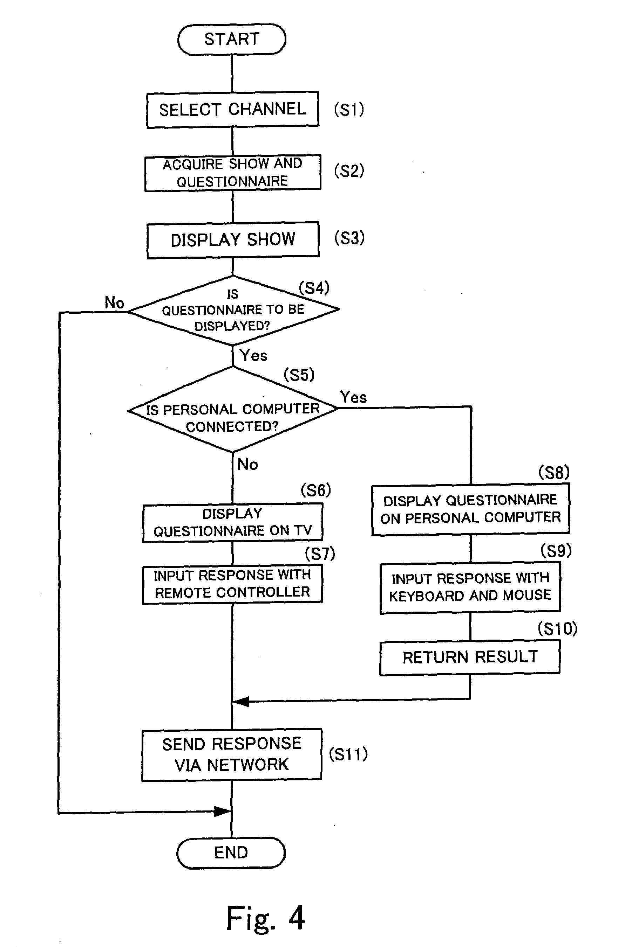

Fig. 4 is a flowchart showing the flow of a sequence of processings from receiving a show and questionnaire information from the base station 10 to sending a response to a questionnaire indicated by the questionnaire information to the base station 10.

Description will be made below in accordance with the flowchart in Fig. 4, referring to Fig. 1 and Fig. 2.

In the memory 38a of the TV 30, there is stored a channel selected at the time the power was turned off previously (referred to as the last channel).

When a user powers on the TV 30 with the use of the switch 31 or the remote controller 32, it is communicated from the switch 31 or the infrared receiving section 32a to the entire control section 38 that power is on. The entire control section 38 acquires the last channel from the memory 38a and communicates the last channel to the tuner 33.

When the user selects a channel with the use of the remote controller 32 or the like (step S1 in Fig. 4), the selected channel is communicated to the tuner 33 via the entire control section 38.

Electrical waves received by the antenna 20 are communicated to the tuner 33. At the tuner 33, an electrical wave of the channel communicated from the entire control section 38 is selected and converted to the digital show information described above. The converted show information is communicated to the signal processing section 34.

At the signal processing section 34, the compressed show information is expanded first. The expanded show information is a packet aggregate configured by data strings called TS (transport stream), and consisting of picture information, voice information, additional information, multiple tables for associating pictures, voices and questionnaires with one another, and the like. In this embodiment, a show number for identifying a show and a type number for identifying the type of the information (picture, voice or additional information) are added to each information included in the TS packet. Correspondence relation between a show and a show number (for example, show_1: PID (show number) "1"; show_2: PID "2", ...) is defined in a PAT (program association table) included in the TS packet, and correspondence relation between an identification number and an information type (for example, picture information: SID (type number) "1", voice information: SID "2", and additional information: SID "3") is defined in a PMT (program map table) prepared for each show. That is, at the signal processing section 34, information added with the same PID (show number) in the TS packet is acquired, and subsequently, by the SID (type number) added to each of the information being identified, picture information, voice information and additional information constituting the same show are extracted (step S2 in Fig. 4). The extracted picture information is communicated to the display control section 35. The voice information is communicated to the voice control section 36, and the additional information is communicated to the entire control section 38.

When the picture information and the voice information are extracted, a picture of the show indicated by the picture information is displayed on the display screen 30a by the display control section 35 (step S3 in Fig. 4), and voices of the show indicated by the voice information are emitted from the speaker 36a by the voice control section 36.

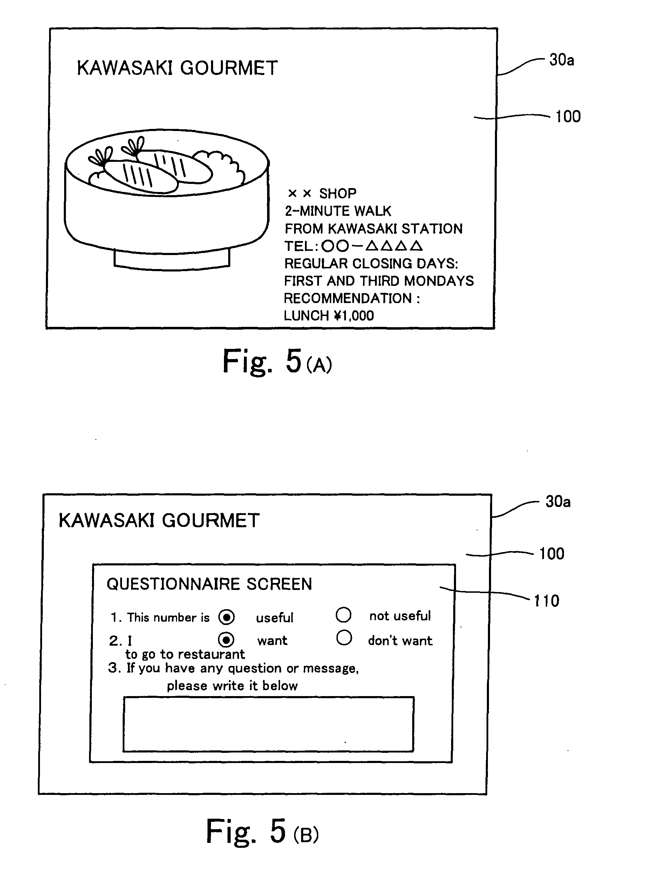

Fig. 5(A) and Fig. 5(B) show images to be displayed on the display screen 30a of the TV 30.

At step S3 in Fig. 4, a picture 100 of a show is displayed on the display screen 30a of the TV 30, as shown in Fig. 5(A).

When the user watches the show on the TV 30 and instructs display of a questionnaire with the remote controller 32 or the like (step S4 in Fig. 4: Yes), the content of the instruction is communicated to the entire control section 38. The entire control section 38 detects whether or not the personal computer 40 is connected to the TV 30, via the personal computer interface 39 (step S5 in Fig. 4).

If the personal computer 40 is not connected (step S5 in Fig. 4: No), then the entire control section 38 sends additional information communicated from the signal processing section 34 to the display control section 35 and displays a questionnaire screen on the display screen 30a (step S6 in Fig. 4).

At step S6 in Fig. 4, a questionnaire screen 110 is displayed on the display screen 30a of the TV 30, being superimposed on the picture 100 of the show as shown in Fig. 5 (B) .

The user confirms the picture 100 of the show and the questionnaire screen 110 shown in Fig. 5(B), and inputs a response with the remote controller 32 in accordance with the questionnaire screen 110 (step S7 in Fig. 4). The inputted response is communicated to the entire control section 38 from the infrared receiving section 32a and then communicated to the network interface 37.

The network interface 37 returns the response to the base station 10 via the communication network 60 (step S11 in Fig. 4).

Here, on the display screen 30a shown in Fig. 5(B), the questionnaire screen 110 is displayed being superimposed on the picture 100 of the show, and therefore, the user cannot respond to the questionnaire while watching the picture 100 of the show. Furthermore, there is a problem that it is very difficult to input a complicated response such as a question and impression by using the remote controller 32 to input a response. In the show delivery system of this embodiment, a questionnaire is displayed on the personal computer 40, and a response is inputted with the use of the mouse 44 or the keyboard 43 of the personal computer 40 (see Fig. 3). And thereby, the user interface is improved.

If the personal computer 40 is connected at step S5 in Fig. 4 (step S5 in Fig. 4: Yes), then the entire control section 38 communicates the additional information communicated from the signal processing section 34 to the personal computer interface 39. The personal computer interface 39 sends the additional information to the personal computer 40 via the USB cable 50.

At the input/output interface 406 of the personal computer 40 shown in Fig. 3, the additional information sent from the TV 30 is received. The received additional information is communicated to the CPU 401 and then communicated to the image display device 42. As a result, the questionnaire included in the additional information is displayed on the display screen 42a of the personal computer 40 (step S8 in Fig. 4).

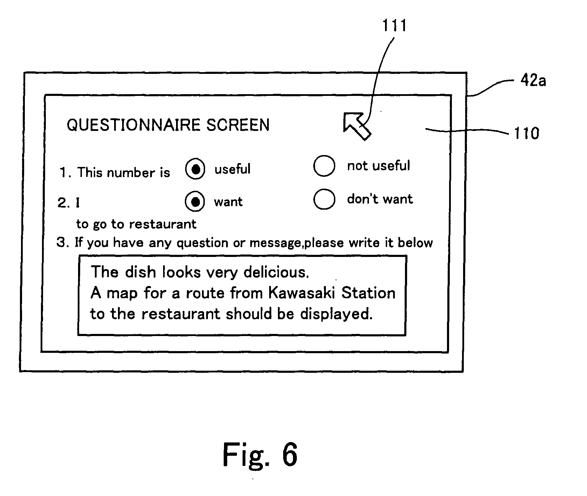

Fig. 6 shows a questionnaire screen to be displayed on the display screen 42a (see Fig. 1) of the personal computer 40.

The questionnaire screen 110 and a pointer 111 are displayed on the display screen 42a. The user moves the pointer 111 using the mouse 44, and inputs a sentence to respond to the questionnaire using the keyboard 43 (step S9 in Fig. 4) . The inputted response is communicated from the mouse 44 or the keyboard 43 to the CPU 401, communicated to the input/output interface 406 by the CPU 401, and returned from the input/output interface 406 to the TV 30 via the USB cable 50 (step S10 in Fig. 4).

As described above, the questionnaire screen is displayed on the personal computer 40, so that the user can respond to the questionnaire while watching the picture 100 of a show displayed on the TV 30. Furthermore, since the user uses the keyboard 43 or the mouse 44 friendly to the user, the user can easily input even a long sentence.

In the TV 30, the response returned from the personal computer 40 is received by the personal computer interface 39, and the received response is communicated to the entire control section 38. The response communicated to the entire control section 38 is then communicated to the network interface 37, and returned to the base station 10 by the network interface 37 via the communication network 60 (step S11 in Fig. 4).

According to the present embodiment, though the personal computer 40 can be used to display a questionnaire or input a response, it is not necessary to connect the personal computer 40 itself to a communication network. Therefore, the user can easily respond to a questionnaire without an additional communication cost or provider fee, and a provider of a show can enhance the user's willingness to respond to a questionnaire and thereby obtain more accurate information certainly.

Though the description has been made on a show delivery system provided with a TV and a personal computer, the show display apparatus stated in the present invention may be not a TV but a personal computer or the like, and the response apparatus stated in the present invention may be not a personal computer but a mobile telephone or the like.

Though the description has been made on the example in which a TV and a personal computer are connected via a USB cable, the "communication pathway without intervention of other apparatuses" stated in the present invention may be a wireless communication pathway, for example, by means of an infrared ray or Bluetooth (registered trademark).

## Claims

1. A display/response system comprising a show display apparatus and a response apparatus,
the show display apparatus comprising:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to the response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus; and
the response apparatus comprising:
a questionnaire receiving section which receives the questionnaire information sent from the show display apparatus;
a questionnaire display section which displays a questionnaire screen configured by the questionnaire information received by the questionnaire receiving section;
a response section which determines a response to the questionnaire on the questionnaire screen displayed by the questionnaire display section, in response to an operation; and
a response returning section which returns the response determined by the response section to the show display apparatus.

2. The display/responsesystem according to claim1, wherein the show display apparatus is a TV, and the response apparatus is a personal computer.

3. The display/responsesystem according to claim 1, wherein the questionnaire sending section of the show display apparatus sends the questionnaire information to the response apparatus via a communication pathway without intervention of other apparatuses, the response transfer section of the show display apparatus performs transfer to the predetermined response collection apparatus via a communication network, and the response returning section of the response apparatus returns the response determined by the response section to the show display apparatus via the communication pathway.

4. The display/response system according to claim 1, wherein the show display section of the show display apparatus displays, of the show received by the show receiving section and the questionnaire information received by the questionnaire receiving section, only the show.

5. A show display apparatus comprising:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus.

6. The show display apparatus according to claim 5, wherein the show display section displays, of the show received by the show receiving section and the questionnaire information received by the questionnaire receiving section, only the show.

7. The show display apparatus according to claim 5, wherein the show display apparatus is a TV.

8. The show display apparatus according to claim 5, wherein the questionnaire sending section sends the questionnaire information to the response apparatus via a communication pathway without intervention of other apparatuses, the response receiving section receives the response to the questionnaire from the response apparatus via the communication pathway, and the response transfer section performs transfer to the predetermined response collection apparatus via a communication network.

9. A show display program storage medium in which a show display program to be executed in a computer is stored, the show display program causing the computer to implement:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a response apparatus which returns a response to a questionnaire indicated by the questionnaire information;
a response receiving section which receives the response to the questionnaire from the response apparatus; and
a response transfer section which transfers the response received by the response receiving section to a predetermined response collection apparatus.
